# EUROPEAN PATENT SPECIFICATION

(11) **EP 3 324 201 B1**
(45) Date of publication and mention of the grant of the patent: **22.03.2023**
(21) Application number: 16199950.3
(22) Date of filing: 22.11.2016
(51) Int. Cl.: G01S 13/931, G01S 7/02, G01S 13/34, G01S 13/58, G01S 7/35

(54) **A VEHICLE RADAR SYSTEM WAVEFORM**
FAHRZEUGRADARSYSTEMWELLENFORM
FORME D'ONDE DE SYSTÈME DE RADAR DE VÉHICULE

(43) Date of publication of application: 23.05.2018
(73) Proprietor: Veoneer Sweden AB, 447 83 Vårgårda (SE)
(72) Inventor: Kritzner, Michael, 97424 Schweinfurt (DE); Klotzbuecher, Dirk, 97320 Mainstockheim (DE)
(74) Representative: Westpatent AB

(56) References cited:
- EP-A1- 2 482 096
- WO-A1-2008/006653
- US-A1- 2009 243 932
- US-A1- 2012 146 844
- US-A1- 2015 160 331

## Description

### TECHNICAL FIELD

The present disclosure relates to a vehicle radar system comprising a transmitter section, a receiver section and at least one control unit. The transmitter section comprises a plurality of transmitter antenna devices, the receiver section comprises a plurality of receiver antenna devices, and the vehicle radar system is arranged to generate SFCW (Stepped Frequency Continuous Wave) ramps.

### BACKGROUND

Many vehicle radar systems comprise means for generating socalled chirp signals that are transmitted, reflected and received by means of appropriate antennas comprised in the radar system. A chirp signal is an FMCW (Frequency Modulated Continuous Wave) signal with a certain amplitude where the frequency is continuously ramped between two values, the chirp signal thus being in the form of a continuous sinusoid where the frequency varies from a first low frequency to a second high frequency over the course of the ramp.

The received signals in a plurality of channels, thus constituted by reflected radar echoes, are mixed with the transmitted chirp signal in order to convert the received signals to baseband signals. These baseband signals, or IF (Intermediate Frequency) signals, are amplified and transferred to an Analog Digital Converter (ADC) arrangement which is arranged to convert the received analog signals to digital signals. The digital signals are used for retrieving range, velocity and azimuth angle of possible targets by sampling and analyzing the received signals. The analysis is for example performed in one or more Digital Signal Processors (DSP:s) by means of Fast Fourier Transform (FFT) processing.

At one instant of time, usually only one frequency is sent by one transmitting antenna. The physical limitations involved with the bandwidth affect the theoretical range and velocity resolution. That implies that the unambiguous range is dependent on the samples per chirp, where the spacing between the chirp ramps determines the velocity resolution. By analogy with the range, the unambiguous velocity depends on the number of chirps.

The azimuth of the targets can be measured by antenna arrays or digital beamforming or by using Multiple Input Multiple Output (MIMO) to generate virtual antenna arrays. By definition, MIMO relates to simultaneous transmission and receiving with multiple antennas. Nevertheless, with FMCW radars, MIMO can only be emulated by alternating transmission and separation between the signals of the transmitting antennas in time domain. To avoid a falsification of the azimuth, adjusting algorithms are necessary.

The traffic density of vehicles equipped with radar sensors is continuously rising, resulting in that the risk of interference between radar sensors increases. In worst case scenarios interference provokes ghost targets leading to unjustified interventions of the active assistance systems, which is highly undesirable.

Other challenges of the future are the radar sensor requirements to provide autonomous driving. Therefore the angular resolution in azimuth and elevation has to be improved compared with ordinary FMCW radar.

US 2012/146844 discloses that as an alternative to FMCW, stepped frequency continuous wave (SFCW) can be used, in which the frequency does not change in a continuous way, but in a stepped way, such that the frequency remains constant for a period of time at each step. SFCW may be used in radar systems which use OFDM (Orthogonal Frequency Division Multiplex), and the frequency steps typically correspond to the OFDM sub-carrier spacing.

As mentioned in US 2012/146844, such radar systems require a wideband IFFT (Inverse Fast Fourier Transform) to be implemented. Typically wideband radar applications have a bandwidth close to one GHz, and to implement this with OFDM, using IFFT, would require converters with a sampling rate equal to the bandwidth of the OFDM symbol.

WO 2008/006653 A1 describes an FMCW radar sensor which uses multiple antenna elements for transmission. The radar signals emitted from different transmitter antennas in a near-field mode of operation are offset in frequency, which allows a fanned out main lobe to be achieved.

US 2015/160331 A1 proposes a radar system based on coded aperture radar (CAR) techniques. The disclosure is remote from new claim 1, being based on entirely different techniques.

EP 2 482 096 A1 describes a multi-antenna radar system based on an OFDM signal format. A drawback of this system is that is requires a wideband ADC.

US 2009/0243932 A1 discusses techniques for locating a mobile device. The proposed system is based on comparison of phase differences of signals received at the mobile device from transmitters at known locations. Some examples of the proposed system is based on an OFDM signal format.

### SUMMARY

The object of the present disclosure is therefore to obtain a vehicle MIMO radar system without the above disadvantages.

This object is obtained by means of a vehicle radar system according to claim 1, and also by a method performed in a vehicle radar system (3) according to claim 3.

According to an example, the vehicle radar system further comprises a common frequency synthesizer, a local oscillator and a mixer. Each SFCW ramp is generated by the frequency synthesizer and mixed with the local oscillator's frequency.

A number of advantages are obtained by means of the present disclosure. Mainly, a radar system having the benefits of a wideband OFDM radar is obtained, the ability of MIMO and insensibility to interference caused by other radar sensors, by using only narrowband OFDM symbols inducing reduced hardware cost compared to a wideband OFDM radar.

### BRIEF DESCRIPTION OF THE DRAWINGS

The present disclosure will now be described more in detail with reference to the appended drawings, where:
- Figure 1: shows a schematic top view of a vehicle;
- Figure 2: shows a simplified schematic of a vehicle radar system;
- Figure 3: shows a schematic view of a SFCW signal and an OFDM symbol:
- Figure 4: shows a schematic view of a stepped ramp waveform according to the invention as claimed;

- Figure 5: shows a schematic view of a general OFDM signal; and
- Figure 6: shows a flowchart for methods according to the present disclosure.

### DETAILED DESCRIPTION

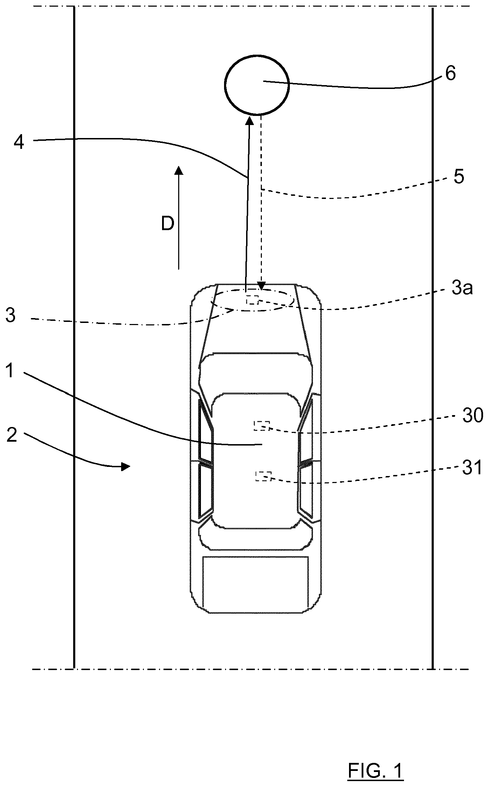

Figure 1 schematically shows a top view of a vehicle 1, constituting an vehicle 1, arranged to run on a road 2 in a direction D, where the vehicle 1 comprises a vehicle radar system 3 which comprises at least one radar sensor 3a and is arranged to distinguish and/or resolve single targets from the surroundings by transmitting signals 4 and receiving reflected signals 5 and using a Doppler effect and indirect time/range measurements by means of phase shifts in a previously well-known manner. The vehicle radar system 3 is arranged to provide azimuth angles of possible objects 6 by simultaneously sampling and analyzing phase and amplitude of the received signals 5.

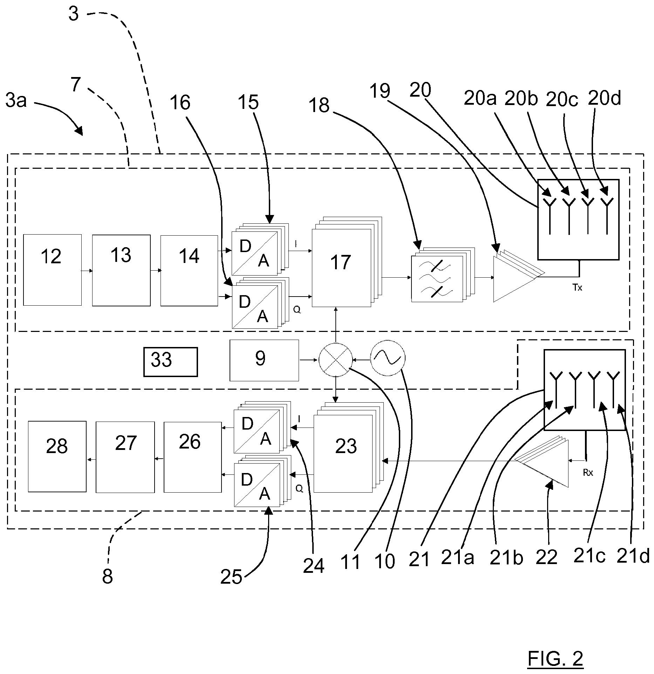

A schematical representation of the vehicle radar system 3 is shown in Figure 2, where there is a transmitter section 7 and a receiver section 8 as well as a common frequency synthesizer 9, local oscillator 10 and mixer 11 arranged for outputting a mixer signal, where the vehicle radar system 3 also comprises at least one control unit 33.

The transmitter section 7 comprises a random bit stream generator 12, an encoder 13, an IFFT (Inverse Fast Fourier Transform) device 14, a first D/A (Digital to Analogue) converter arrangement 15 adapted for supplying transmitter I-signals and a second D/A converter arrangement 16 adapted for supplying transmitter Q-signals, a first I/Q mixer arrangement 17 adapted for mixing the transmitter I-signals and the transmitter Q-signals with the mixer signal, a band-pass filter arrangement 18, a transmitter amplifier arrangement 19 and a transmitter antenna arrangement 20 comprising said four transmitter antenna devices 20a, 20b, 20c, 20d.

The IFFT device 14 is adapted to generate an IFFT for each transmitter antenna device 20a, 20b, 20c, 20d separately dependent on the subcarriers transmitted by each single transmitter antenna device 20a, 20b, 20c, 20d. Furthermore, every transmitter antenna device 20a, 20b, 20c, 20d is connected to its own corresponding transmitter amplifier, band-pass filter, I/Q mixer and D/A converter comprised in the respective arrangement as schematically indicated in Figure 2.

The receiver section 8 comprises a receiver antenna arrangement 21 comprising four receiver antenna devices 21a, 21b, 21c, 21d, a receiver amplifier arrangement 22, a second I/Q mixer arrangement 23 adapted for mixing a received signal with the mixer signal and providing received I-signals to a first A/D (Analog to Digital) converter arrangement 24 and received Q-signals to a second A/D converter arrangement 25, an FFT (Fast Fourier Transform) device 26, a complex division device 27 and a DSP (Digital Signal Processor) arrangement 28.

The FFT device 26 is adapted to generate an FFT for each receiver antenna device 21a, 21b, 21c, 21d separately dependent on the subcarriers received by each single receiver antenna device 21a, 21b, 21c, 21d. Furthermore, every receiver antenna device 21a, 21b, 21c, 21d is connected to its own corresponding receiver amplifier, I/Q mixer and A/D converter comprised in the respective arrangement as schematically indicated in Figure 2.

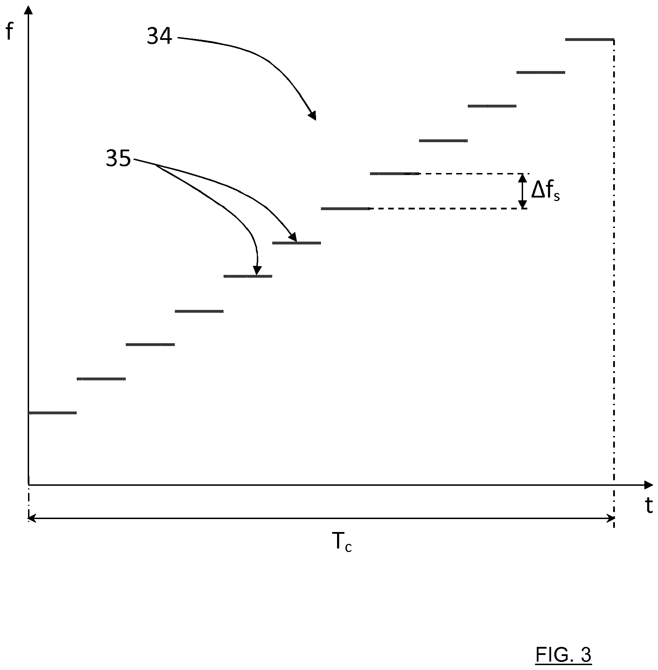

With reference also to Figure 3, the vehicle radar system 3 is arranged for generating stepped sweep signals in the form of SFCW (Stepped Frequency Continuous Wave), ramps 34 of a previously known kind, constituting said mixer signal, each ramp comprising a plurality of SFCW frequency steps 35 (only a few indicated for reasons of clarity), each SFCW frequency step 35 having a frequency step span Δfₛ.

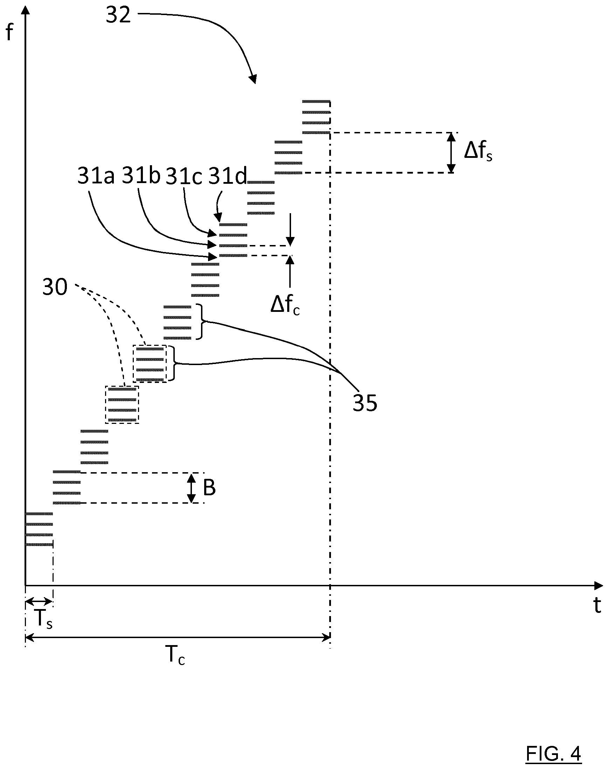

According to the invention as claimed, with reference also to Figure 4, the transmitter section 7 is arranged to generate narrowband OFDM (Orthogonal Frequency Division Multiplex) symbols 30 (only a few indicated for reasons of clarity), and the vehicle radar system 3 is arranged to mix each OFDM symbol 30 with a corresponding SFCW frequency step 35 of each SFCW ramp 34.

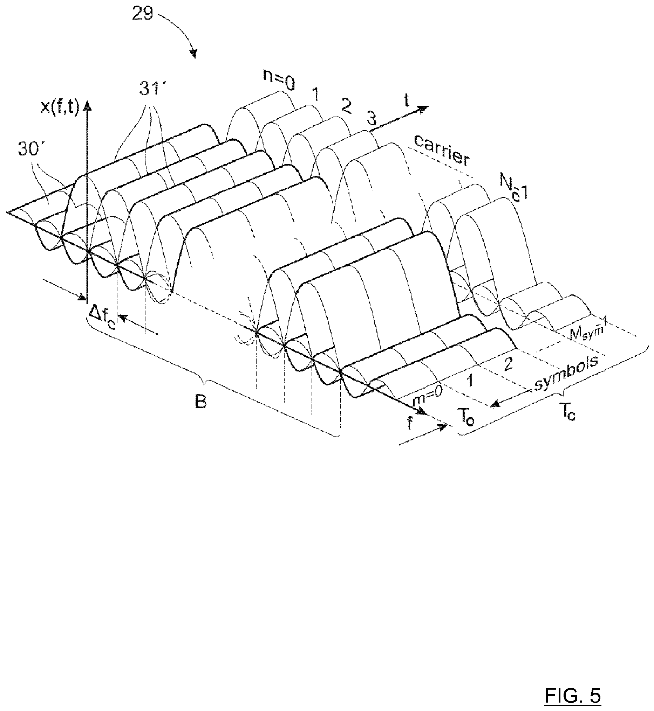

More in detail, Figure 4 shows the frequency f of a resulting stepped OFDM ramp waveform 32 according to the present disclosure as function of time t, each OFDM symbol 30 comprises a plurality of subcarriers 31a, 31b, 31c, 31d, and each SFCW frequency step 35 that has a frequency step span Δfₛ comprises an OFDM symbol 30, where each subcarrier 31a, 31b, 31c, 31d is transmitted by a corresponding transmitter antenna device 20a, 20b, 20c, 20d. This means that each OFDM symbol is split up such that its subcarriers are allocated exclusively to a corresponding transmitting antenna device 20a, 20b, 20c, 20d. Every transmitting antenna device 20a, 20b, 20c, 20d then transmits at least one subcarrier of the said OFDM symbol mixed with the SFCW frequency step. The above will now be described more in detail. Figure 5 having reference signs corresponding to the one used in Figure 3 and Figure 4, shows an example of a general OFDM signal 29 having an amplitude x shown a function of both time t and frequency f comprising a number M_{sym} of symbols 30' (only a few indicated for reasons of clarity) during a certain total symbol time T_{c}. Every symbol 30' comprises a number N_{c} of subcarriers 31' (only a few indicated for reasons of clarity) and lasts for a symbol durance time Tₒ. The spectral spacing of each subcarrier 31' is a frequency span Δf_{c}, where all subcarriers 31' occupy a certain bandwidth B. For reasons of clarity, symbol separation in time domain and modulation are not shown in this diagram; suitable configurations of these being obvious for the skilled person. The flanking symbols in time domain could overlap in frequency domain; this is not shown here for reasons of clarity.

The spectrum of each symbol 30' is thus represented by the subcarriers 31'

As shown in Figure 4, the number M_{sym} of symbols 30 (only a few indicated for reasons of clarity) during the total symbol time T_{c} is eleven, i.e. the total symbol time T_{c} equals eleven times the symbol durance time To. Every symbol 30 comprises four subcarriers 31a, 31b, 31c, 31d (only indicated for one symbol for reasons of clarity) and lasts for the symbol durance time Tₒ, i.e. N_{c}=4, and thus the bandwidth B comprises four frequency spans Δf_{c}.

It should be noted that, although not necessary, the frequency step span Δfₛ can be smaller than the bandwidth B, as illustrated in Figure 4. The stepped OFDM ramp waveform 32 shown is then repeated during a radar cycle that according to some aspects comprises stepped ramp waveforms according to the required velocity unambiguity like in FMCW or SFCW.

The number of subcarriers 31a, 31b, 31c, 31d for each symbol 30 has to be a multiple of the number of transmitter antenna devices 20a, 20b, 20c, 20d, where each subcarrier 31a, 31b, 31c, 31d is transmitted by one single transmitting antenna 20a, 20b, 20c, 20d; in this example the number of subcarriers 31a, 31b, 31c, 31d for each symbol 30, four, equals the number of transmitter antenna devices 20a, 20b, 20c, 20d.

MIMO (Multiple Input Multiple Output) is enabled since the transmitter antenna devices 20a, 20b, 20c, 20d send mutually different subcarriers 31a, 31b, 31c, 31d by means of mutually different frequencies. By definition of OFDM, these subcarriers 31a, 31b, 31c, 31d are orthogonal in the frequency domain, which means that they do not influence each other.Each subcarrier 31a, 31b, 31c, 31d is allocated to exact one transmitting antenna device 20a, 20b, 20c, 20d that constitutes a corresponding geometrical origin of the signal.

In radar signal processing, both the combination of subcarriers 31a, 31b, 31c, 31d and transmitting antenna devices 20a, 20b, 20c, 20d, as well as the geometrical origin of each received subcarrier, are known. Therefore, the received OFDM symbols 30 can be split up to their corresponding subcarriers 31a, 31b, 31c, 31d to build virtual antenna arrays. For each combination of transmitting antenna devices and receiving antenna devices, one virtual receiving antenna device exists; in this example there are sixteen different possibilities. By virtually superposing all transmitter antenna devices 20a, 20b, 20c, 20d in one point, the virtual receiver antenna devices are relocated in a virtual antenna array, such a virtual antenna array having a configuration that depends on the geometrical placing of the antenna devices.

This enables exploitation of the benefits of the OFDM waveform by using the stepped OFDM ramp waveform 32 according to the present disclosure in wideband radar applications by using a relatively narrow-banded OFDM signal and relatively narrow-banded D/A converters 15, 16 and A/D converters 24, 25. The coded OFDM symbols that are split on multiple transmitter antenna devices 20a, 20b, 20c, 20d result in MIMO ability and insensibility to interference caused by other radar sensors.

With renewed reference to Figure 2, which will now be described more in detail, to generate a modulation symbol, a random bit stream is generated by the random bit stream generator 12 and is split into segments. These segments are mapped by PSK (Phase Shift Keying) or QAM (Quadrature Amplitude Modulation) in the encoder 13. Each modulated segment is allocated to one bin of the discrete spectrum.

The spectrum is transformed to a discrete time signal by the use of an IFFT in the IFFT device 14. The I/Q-components of the signal are converted by the D/A converter arrangements 15, 16 and mixed with the radio frequency of an SFCW frequency step of an SFCW ramp in the first I/Q mixer arrangement 17. Each SFCW ramp is generated by the frequency synthesizer 9 and mixed with the local oscillator's frequency, and the resulting OFDM signal is amplified and then transmitted by means of the transmitter antenna arrangement 20.

The processing at the receiver section 8 is mainly inverse to the above. Briefly, after one SFCW frequency step 35 of the stepped OFDM ramp waveform 32 is received by the receiver antenna arrangement 21 and amplified, the received signal of every receiver antenna device 21a, 21b, 21c, 21d is mixed down with the frequency of the said SFCW frequency step 35 by means of the second I/Q mixer arrangement 23. The difference frequency of each received signal is sampled with a sampling rate equal to the bandwidth of each OFDM symbol 35 in the corresponding A/D converter arrangement 24, 25.

An FFT is performed on the I/Q samples by the FFT device 26 after being converted by the A/D converter arrangements 24, 25, such that after conversion into a digital time signal, the signal is transformed into the frequency domain by means of the FFT. The FFT is performed on every signal from every receiver antenna device 21a, 21b, 21c, 21d; in this context said signal comprises all subcarriers overlapped in time domain.

By definition, the number of the complex A/D converter samples has to be equal to the number N_{c} of subcarriers. The result of the FFT is a complex value with amplitude and phase for each frequency bin. The amplitude and phase are dependent on the transmitted signal; especially the modulation and the propagation path. The frequency bins are equal to the discrete subcarrier frequencies in the baseband.

In case of communication applications, the influences from the transmission channel have to be eliminated to acquire the correct modulation and thereby the correct data. In radar applications, the points of interests are vice versa. To eliminate the modulation, complex division is performed in the complex division device 27.

After that, the complex values depend only on the propagation path. For each subcarrier, one I/Q sample exists after the first FFT and the complex division. In the case of an SFCW radar, there is one I/Q sample per frequency step. To obtain the range of the target in both cases, an FFT is performed over these samples.

After the complex division of the spectrum in the complex division device, the range and velocity processing is equal to the standard SFCW signal processing; a two dimensional FFT is thus performed in the DSP arrangement 28 in a well-known manner such that a range/velocity-matrix is obtained. Azimuth and elevation can be processed by an FFT over the bins of the virtual antenna array. Each antenna of the virtual antenna array is represented by a separate range/velocity-matrix in the data structure. By using a two dimensional antenna array also the elevation of the targets could be measured. Therefore a four dimensional data structure is necessary, while the waveform remains constant.

Compared to OFDM and state of the art technologies, the present disclosure offers:
- An equal processing gain with 2D-FFT.
- A possibility to use OFDM and its advantages in wideband radar applications by using narrowband OFDM.
- Suitability for virtual antenna arrays.
- SFCW only mode possible.
- Depending on the parametrization, one OFDM symbol could be used to check target existence.
- A flexible number of active transmitting antennas that can be adapted to the environment and the necessary angular resolution.
- Lower duty cycle compared to alternating transmission used to emulate MIMO on FMCW (Frequency Modulated Continuous Wave) or SFCW radar sensors.
- Increased cost-benefit ratio by means of reduced converter costs compared to an OFDM radar with identical bandwidth.

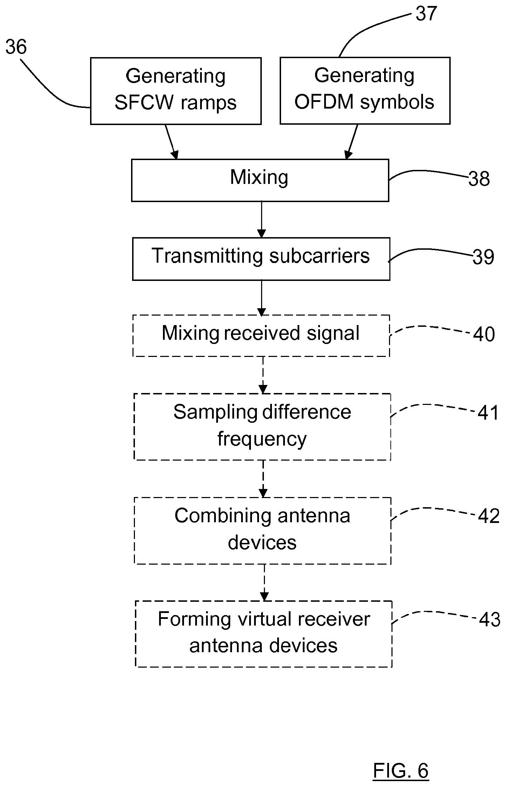

With reference to Figure 6, the present disclosure also relates to a method performed in a vehicle radar system 3 comprising a transmitter section 7, a receiver section 8 and a control unit 33, where the transmitter section 7 comprises a plurality of transmitter antenna devices 20a, 20b, 20c, 20d and where the receiver section 8 comprises a plurality of receiver antenna devices 21a, 21b, 21c, 21d, the method comprising:
(36) generating SFCW, Stepped Frequency Continuous Wave, ramps 34, each SFCW ramp 34 comprising a sequence of SFCW constant frequency steps 35 separated by a frequency step span Δfₛ, where each SFCW frequency step 35 in an SFCW ramp 34 has a time duration equal to an OFDM, Orthogonal Frequency Division Multiplexing, symbol time duration Tₛ of the vehicle radar system 3. The method further comprises:
(37) generating OFDM symbols 30 having the OFDM symbol time duration Tₛ, where each OFDM symbol 30 comprises a plurality of modulated subcarriers 31a, 31b, 31c, 31d separated by a frequency span Δf_{c} equal to the inverse of the OFDM symbol time duration Tₛ);
(38) mixing each OFDM symbol 30 with a corresponding SFCW frequency step 35 in an SFCW ramp 34 such that a resulting stepped OFDM ramp waveform 32 is obtained; and
(39) transmitting each subcarrier 31a, 31b, 31c, 31d by using a corresponding exclusively allocated transmitting antenna device 20a, 20b, 20c, 20d);
(40) mixing a received signal from every receiver antenna device 21a, 21b, 21c, 21d with the SFCW ramp 34); and
(41) sampling the mixed received signal of every receiver antenna device 21a, 21b, 21c, 21d at a sampling rate corresponding to the OFDM symbol time duration Tₛ.

The present disclosure is not limited to the examples above, but may vary freely within the scope of the appended claims. For example, the vehicle radar system 3 can be implemented in any type of vehicle such as cars, trucks and buses as well as boats and aircraft.

The schematics of the vehicle radar system 3 are simplified, only showing parts that are considered relevant for an adequate description of the present disclosure. It is understood that the general design of radar systems of this kind is well-known in the art. For example, no devices that are arranged to use the acquired target information is shown, but many different such devices are of course conceivable; for example a warning and/or collision avoidance system.

The number of antenna arrangements, antennas within each antenna arrangement and IF signals may vary. The number of antennas is flexible and, for example, depends on the budget, the spacing and the desired angular resolution.

Several components in the vehicle radar system 3 are to be interpreted as having a corresponding functionality, and may be integrated into one or more units that can be common for two or more of these functionalities. For example, the D/A converter arrangements 15, 16, A/D converter arrangements 24, 25 and the DSP arrangement 28 should each one be interpreted as having a corresponding D/A converter arrangement, A/D converter arrangement or DSP arrangement functionality, and may each be constituted by a plurality of separate components. Alternatively, each D/A converter arrangements and/or each A/D converter arrangements may be comprised in one respective chip, and each DSP arrangement may be comprised in one DSP chip. The DSP arrangement/arrangements can be combined with said at least one control unit 33. According to some aspects, all steps before the D/A converter arrangements after the A/D converter arrangements take place in a common DSP.

Each antenna device 20a, 20b, 20c, 20d; 21a, 21b, 21c, 21d may be constituted by one antenna element, an array of antenna elements or several arrays of antenna elements.

The random bit stream generator 12 is used for modulation, and generally, the modulation has not to be random; it only has to be different from all other radar sensors transmitting on the same band. Therefore, the random bit stream generator 12 is generally constituted by a modulation generator.

## Claims

1. A vehicle radar system (3) comprising a transmitter section (7), a receiver section (8) and a control unit (33), where the transmitter section (7) comprises a plurality of transmitter antenna devices (20a, 20b, 20c, 20d) and where the receiver section (8) comprises a plurality of receiver antenna devices (21a, 21b, 21c, 21d), where furthermore the vehicle radar system (3) is arranged to generate SFCW, Stepped Frequency Continuous Wave, ramps (34), each SFCW ramp (34) comprising a sequence of SFCW constant frequency steps (35) separated by a frequency step span (Δfₛ), where each SFCW frequency step (35) in an SFCW ramp (34) has a time duration equal to an OFDM, Orthogonal Frequency Division Multiplexing, symbol time duration (Tₒ) of the vehicle radar system (3), **characterized in that** the radar system (3) is arranged to generate OFDM symbols (30) having the OFDM symbol time duration (Tₒ) and an OFDM symbol bandwidth (B), where each OFDM symbol (30) comprises a plurality of modulated subcarriers (31a, 31b, 31c, 31d) separated by a frequency span (Δf_{c}) , and to mix each OFDM symbol with a corresponding SFCW frequency step (35) in an SFCW ramp (34) such that a resulting stepped OFDM ramp waveform (32) is obtained, where the subcarriers (31a, 31b, 31c, 31d) of each OFDM symbol are each allocated exclusively to, and transmitted by, a corresponding transmitting antenna device (20a, 20b, 20c, 20d), where the receiver section (8) is arranged to mix down a received signal of every receiver antenna device (21a, 21b, 21c, 21d) with the SFCW ramp (34), where the receiver section (8) is arranged to sample the mixed down received signal of each receiver antenna device (21a, 21b, 21c, 21d) at a sampling rate equal to the bandwidth (B) of the OFDM symbol (30).

2. The vehicle radar system (3) according to claim 1, **characterized in that** the vehicle radar system (3) further comprises a frequency synthesizer (9), a local oscillator (10) and a mixer (11) common to the transmitter section (7) and to the receiver section (8), where each SFCW ramp (34) is generated by the frequency synthesizer (9) and mixed with the local oscillator's frequency.

3. A method performed in a vehicle radar system (3) comprising a transmitter section (7), a receiver section (8) and a control unit (33), where the transmitter section (7) comprises a plurality of transmitter antenna devices (20a, 20b, 20c, 20d) and where the receiver section (8) comprises a plurality of receiver antenna devices (21a, 21b, 21c, 21d), the method comprising:
(36) generating SFCW, Stepped Frequency Continuous Wave, ramps (34), each SFCW ramp (34) comprising a sequence of SFCW constant frequency steps (35) separated by a frequency step span (Δfₛ), where each SFCW frequency step (35) in an SFCW ramp (34) has a time duration equal to an OFDM, Orthogonal Frequency Division Multiplexing, symbol time duration (Tₒ) of the vehicle radar system (3), **characterized in that** method further comprises:
(37) generating OFDM symbols (30) having the OFDM symbol time duration (Tₒ), where each OFDM symbol (30) comprises a plurality of modulated subcarriers (31a, 31b, 31c, 31d) separated by a frequency span (Δf_{c});
(38) mixing each OFDM symbol (30) with a corresponding SFCW frequency step (35) in an SFCW ramp (34) such that a resulting stepped OFDM ramp waveform (32) is obtained; and
(39) transmitting each subcarrier (31a, 31b, 31c, 31d) by using a corresponding exclusively allocated transmitting antenna device (20a, 20b, 20c, 20d);
(40) mixing down a received signal from every receiver antenna device (21a, 21b, 21c, 21d) with the SFCW ramp (34); and
(41) sampling the mixed down received signal of every receiver antenna device (21a, 21b, 21c, 21d) at a sampling rate equal to the bandwidth (B) of the OFDM symbol (30).

## Patentansprüche

1. Fahrzeugradarsystem (3), umfassend einen Senderabschnitt (7), einen Empfängerabschnitt (8) und eine Steuereinheit (33), wobei der Senderabschnitt (7) eine Vielzahl von Senderantennenvorrichtungen (20a, 20b, 20c, 20d) umfasst und wobei der Empfängerabschnitt (8) eine Vielzahl von Empfängerantennenvorrichtungen (21a, 21b, 21c, 21d) umfasst, wobei das Fahrzeugradarsystem (3) ferner so angeordnet ist, dass es SFCW-, Stepped Frequency Continuous Wave, Rampen (34) erzeugt, jede SFCW-Rampe (34) umfassend eine Folge von SFCW-Konstantfrequenzschritten (35), die durch eine Frequenzschritt-Spanne (Δfs) getrennt sind, wobei jeder SFCW-Frequenzschritt (35) in einer SFCW-Rampe (34) eine Zeitdauer aufweist, die gleich einer OFDM-, Orthogonal Frequency Division Multiplexing, Symbolzeitdauer (To) des Fahrzeugradarsystems (3) ist, **dadurch gekennzeichnet, dass** das Radarsystem (3) so angeordnet ist, dass es OFDM-Symbole (30), die die OFDM-Symbolzeitdauer (To) und eine OFDM-Symbolbandbreite (B) aufweisen, erzeugt, wobei jedes OFDM-Symbol (30) eine Vielzahl von modulierten Unterträgern (31a, 31b, 31c, 31d) umfasst, die durch eine Frequenzspanne (Δfc) getrennt sind, und um jedes OFDM-Symbol mit einem entsprechenden SFCW-Frequenzschritt (35) in einer SFCW-Rampe (34) zu mischen, sodass eine resultierende gestufte OFDM-Rampenwellenform (32) erhalten wird, wobei die Unterträger (31a, 31b, 31c, 31d) jedes OFDM-Symbols jeweils einer entsprechenden
Sendeantennenvorrichtung (20a, 20b, 20c, 20d) exklusiv zugewiesen und durch diese gesendet werden, wobei der Empfängerabschnitt (8) so angeordnet ist, dass er ein empfangenes Signal jeder Empfängerantennenvorrichtung (21a, 21b, 21c, 21d) mit der SFCW-Rampe (34) abmischt, wobei der Empfängerabschnitt (8) so angeordnet ist, dass er das abgemischte empfangene Signal jeder Empfängerantennenvorrichtung (21a, 21b, 21c, 21d) mit einer Abtastrate abtastet, die gleich der Bandbreite (B) des OFDM-Symbols (30) ist.

2. Fahrzeugradarsystem (3) nach Anspruch 1, **dadurch gekennzeichnet, dass** das Fahrzeugradarsystem (3) ferner einen Frequenzsynthesizer (9), einen lokalen Oszillator (10) und einen Mischer (11) umfasst, die dem Senderabschnitt (7) und dem Empfangsabschnitt (8) gemeinsam sind, wobei jede SFCW-Rampe (34) durch den Frequenzsynthesizer (9) erzeugt und mit der Frequenz des lokalen Oszillators gemischt wird.

3. Verfahren, das in einem Fahrzeugradarsystem (3) durchgeführt wird, umfassend einen Senderabschnitt (7), einen Empfängerabschnitt (8) und eine Steuereinheit (33), wobei der Senderabschnitt (7) eine Vielzahl von Senderantennenvorrichtungen (20a, 20b, 20c, 20d) umfasst und wobei der Empfängerabschnitt (8) eine Vielzahl von Empfängerantennenvorrichtungen (21a, 21b, 21c, 21d) umfasst, das Verfahren umfassend:
(36) Erzeugen von SFCW-, Stepped Frequency Continuous Wave, Rampen (34), jede SFCW-Rampe (34) umfassend eine Folge von SFCW-Konstantfrequenzschritten (35), die durch eine Frequenzschrittspanne (Δfs) getrennt sind, wobei jeder SFCW-Frequenzschritt (35) in einer SFCW-Rampe (34) eine Zeitdauer aufweist, die gleich einer OFDM-, Orthogonal Frequency Division Multiplexing, Symbolzeitdauer (To) des Fahrzeugradarsystems (3) ist, **dadurch gekennzeichnet, dass** das Verfahren ferner umfasst:
(37) Erzeugen von OFDM-Symbolen (30), die die OFDM-Symbolzeitdauer (To) aufweisen, wobei jedes OFDM-Symbol (30) eine Vielzahl von modulierten Unterträgern (31a, 31b, 31c, 31d) umfasst, die durch eine Frequenzspanne (Afc) getrennt sind;
(38) Mischen jedes OFDM-Symbols (30) mit einem entsprechenden SFCW-Frequenzschritt (35) in einer SFCW-Rampe (34), sodass eine resultierende gestufte OFDM-Rampenwellenform (32) erhalten wird; und
(39) Senden jedes Unterträgers (31a, 31b, 31c, 31d) durch Verwenden einer entsprechenden exklusiv zugewiesenen Sendeantennenvorrichtung (20a, 20b, 20c, 20d);
(40) Abmischen eines empfangenen Signals von jeder Empfängerantennenvorrichtung (21a, 21b, 21c, 21d) mit der SFCW-Rampe (34); und
(41) Abtasten des abgemischten empfangenen Signals von jeder Empfängerantennenvorrichtung (21a, 21b, 21c, 21d) mit einer Abtastrate, die gleich der Bandbreite (B) des OFDM-Symbols (30) ist.

## Revendications

1. Système radar de véhicule (3) comprenant une section d'émetteur (7), une section de récepteur (8) et une unité de commande (33), la section d'émetteur (7) comprenant une pluralité de dispositifs d'antenne d'émetteur (20a, 20b, 20c, 20d) et la section de récepteur (8) comprenant une pluralité de dispositifs d'antenne de récepteur (21a, 21b, 21c, 21d), en outre, le système de radar de véhicule (3) étant agencé pour générer des rampes SFCW (34), à onde continue de fréquence échelonnée, chaque rampe SFCW (34) comprenant une séquence d'échelons de fréquence constante SFCW (35) séparées par une plage d'échelon de fréquence (Δfₛ), chaque échelon de fréquence SFCW (35) dans une rampe SFCW (34) ayant une durée égale à une durée de temps de symbole OFMD (Tₒ), multiplexage par répartition orthogonale de la fréquence, du système radar de véhicule (3), **caractérisé en ce que** le système radar (3) est agencé pour générer des symboles OFDM (30) ayant la durée de temps de symbole OFDM (Tₒ) et une largeur de bande (B) de symbole OFDM, chaque symbole OFDM (30) comprenant une pluralité de sous-porteuses modulées (31a, 31b, 31c, 31d) séparées par une plage de fréquences (Δf_{c}), et pour mélanger chaque symbole OFDM avec un échelon de fréquence SFCW correspondant (35) dans une rampe SFCW (34) de telle sorte qu'une forme d'onde de rampe OFDM échelonnée résultante (32) est obtenue, les sous-porteuses (31a, 31b, 31c, 31d) de chaque symbole OFDM étant chacune allouées exclusivement à, et transmises par, un dispositif d'antenne de transmission correspondant (20a, 20b, 20c, 20d), la section de récepteur (8) étant agencée pour mélanger un signal reçu de chaque dispositif d'antenne récepteur (21a, 21b, 21c, 21d) avec la rampe SFCW (34), la section de réception (8) étant agencée pour échantillonner le signal reçu mélangé de chaque dispositif d'antenne récepteur (21a, 21b, 21c, 21d) à un taux d'échantillonnage égal à la largeur de bande (B) du symbole OFDM (30).

2. Système radar de véhicule (3) selon la revendication 1,
**caractérisé en ce queque** le système radar de véhicule (3) comprend en outre un synthétiseur de fréquence (9), un oscillateur local (10) et un mélangeur (11) commun à la section émettrice (7) et à la section réceptrice (8), chaque rampe SFCW (34) étant générée par le synthétiseur de fréquence (9) et mélangée à la fréquence de l'oscillateur local.

3. Procédé effectué dans un système de radar de véhicule (3) comprenant une section d'émetteur (7), une section de récepteur (8) et une unité de commande (33), la section d'émetteur (7) comprenant une pluralité de dispositifs d'antenne d'émetteur (20a, 20b, 20c, 20d) et la section de récepteur (8) comprenant une pluralité de dispositifs d'antenne de récepteur (21a, 21b, 21c, 21d), le procédé comprenant :
(36) la génération de rampes SFCW (34), à onde continue de fréquence échelonnée, chaque rampe SFCW (34) comprenant une séquence d'échelons de fréquence constante SFCW (35) séparés par une plage d'échelon de fréquence (Δfₛ), chaque échelon de fréquence SFCW (35) dans une rampe SFCW (34) ayant une durée égale à une durée de temps de symbole OFDM (Tₒ), multiplexage par répartition orthogonale de la fréquence, du système radar de véhicule (3), **caractérisé en ce que** le procédé comprend en outre :
(37) la génération de symboles OFDM (30) ayant la durée de temps de symbole OFDM (Tₒ), chaque symbole OFDM (30) comprenant une pluralité de sous-porteuses modulées (31a, 31b, 31c, 31d) séparées par une plage de fréquences (Af_{c}) ;
(38) le mélange de chaque symbole OFDM (30) avec un échelon de fréquence SFCW correspondant (35) dans une rampe SFCW (34), de telle sorte qu'une forme d'onde de rampe OFDM échelonnée résultante (32) est obtenue ; et
(39) la transmission de chaque sous-porteuse (31a, 31b, 31c, 31d) à l'aide d'un dispositif d'antenne de transmission (20a, 20b, 20c, 20d) associé exclusivement,
(40) le mélange d'un signal reçu de chaque dispositif d'antenne récepteur (21a, 21b, 21c, 21d) avec la rampe SFCW (34) ; et
(41) l'échantillonnage du signal reçu mélangé de chaque dispositif d'antenne récepteur (21a, 21b, 21c, 21d) à un taux d'échantillonnage égal à la largeur de bande (B) du symbole OFDM (30).
